# EUROPÄISCHE PATENTANMELDUNG

(11) **EP 3 279 821 A1**
(43) Veröffentlichungstag der Anmeldung: **07.02.2018**
(21) Anmeldenummer: 16182906.4
(22) Anmeldetag: 05.08.2016
(51) Int. Cl.: G06F 21/31, G06F 21/41, H04L 29/06

(54) **VERFAHREN UND ANORDNUNG ZUR AUTHENTIFIZIERUNG EINES BENUTZERS FÜR DIE NUTZUNG EINER MEHRZAHL ANWENDUNGEN ODER DIENSTE IN EINEM COMPUTERNETZWERK**

(71) Anmelder: Siemens Aktiengesellschaft, 80333 München (DE)
(72) Erfinder: Eckl, Roland, 91301 Forchheim (DE); Herberth, Harald, 90522 Oberasbach (DE)

(57) **Zusammenfassung**

Die Erfindung betrifft ein Verfahren und eine Anordnung zur Authentifizierung eines Benutzers für die Nutzung einer Mehrzahl Anwendungen (AW1a, AW1b, AW2) oder Dienste (D1) in einem Computernetzwerk (NW), wobei der Benutzer zur Nutzung einer Anwendung (AW1a, AW1b, AW2) oder eines Dienstes (D1) Anmeldeinformationen bereitstellt, und wobei diese Anmeldeinformationen hinsichtlich einer Gültigkeit überprüft werden. Dabei wird aus individuellen Merkmalen einer benutzerseitigen Laufzeitumgebung ein Identifikationsdatensatz gebildet, wobei dieser Identifikationsdatensatz zu einer Authentifizierungsinstanz (ADb) übermittelt und mit zumindest einem gespeicherten Identifikationsdatensatz verglichen wird, wobei bei hinreichender Übereinstimmung geprüft wird, ob zu dem Identifikationsdatensatz gültige Anmeldeinformationen gespeichert sind, wonach ggf. die Nutzung der Anwendung (AW1a, AW1b, AW2) oder des Dienstes (D1) freigegeben wird, und anderenfalls von dem Nutzer die Bereitstellung von Anmeldeinformationen angefordert werden. Dadurch ergibt sich für den Benutzer eine gemeinsame Anmeldung aller Anwendungen, Dienste oder Applikationen, die zu gemeinsamen durch den Identifikationsdatensatz identifizierbaren Umgebungen gehören. Unnötige Mehrfachanmeldungen eines Benutzers bei verschiedenen Anwendungen, Diensten oder Applikationen werden dadurch vermieden.

## Beschreibung

Die Erfindung betrifft ein Verfahren zur Authentifizierung eines Benutzers für die Nutzung einer Mehrzahl Anwendungen oder Dienste gemäß dem Oberbegriff des Patentanspruchs 1, und eine Anordnung aus einer Automatisierungskomponente und einer Authentifizierungsinstanz gemäß dem Oberbegriff des Patentanspruchs 10.

Viele Systeme, insbesondere industrielle Automatisierungsanordnungen, beinhalten Einrichtungen und Methoden für einen Zugriffsschutz (Autorisierung) auf Anwendungen, Dienste und Daten, und Einrichtungen und Methoden für eine Benutzeranmeldung (Authentifizierung) zur Sicherstellung eines solchen Zugriffs nur durch berechtigte Benutzer. Die zu schützenden Anwendungen oder Dienste sind meist eigenständige Desktop-Applikationen, also auf einem Client-Computer ablaufende Anwendungen, oder sogenannte Web-Applikationen, wobei die Web-Applikationen regelmäßig aus einem Anteil bestehen, der in einem Browser ausgeführt wird, und einem Anteil, der Serverseitig abläuft. Üblicherweise muss sich ein Benutzer bei allen Anwendungen oder Diensten getrennt anmelden und somit authentifizieren, wobei es bei den Web-Anwendungen sogar gegeben sein kann, dass eine gesonderte Anmeldung (Authentifizierung) sowohl für den Server-Anteil, als auch für den lokalen Client-Anteil der jeweiligen Anwendung vorgenommen werden muss.

Eine solche Mehrfach-Anmeldung (Mehrfach-Authentifizierung) ist mit Nachteilen verbunden. Ein Benutzer muss mehrfach die Zeit für eine Anmeldung aufwenden, muss also möglicherweise für jede Anwendung (Applikation) oder Dienst unterschiedliche Benutzernahmen und Passwörter vorhalten und eingeben. Möglicherweise müssen auch aus Benutzersicht gemeinsame Sitzungsparameter wie zum Beispiel die Auswahl einer Anzeigesprache und sonstige benutzerspezifische Einstellungen getrennt für jede Anwendung oder jeden zu nutzenden Dienst eingestellt werden, was einen entsprechenden mehrfachen Aufwand bedeutet.

Es sind verschiedene Verfahren und Anwendungen bekannt, die diese geschilderten Nachteile verhindern oder abmildern sollen, indem die Anzahl der Authentifizierungen eines Benutzers verringert werden soll.

Bei Standard-Betriebssystemen (z. B. Microsoft Windows oder Linux) meldet sich ein Benutzer bei seinem Betriebssystem an. Jede Desktop-Anwendung läuft dann unter der Kennung dieses Benutzers, so dass sich der Benutzer bei den Desktop-Anwendungen nicht gesondert anmelden bzw. authentifizieren muss. Will sich ein anderer Benutzer anmelden, müssen alle Anwendungen zuvor geschlossen werden. Eine automatische Anmeldung bei web-basierten Anwendungen oder Diensten, insbesondere bei den Server-Komponenten, findet nicht statt.

Für web-basierte Anwendungen, deren Client-Anteil in einem Browser abläuft, kann über sogenannte Browser-Plug-Ins der an ein Computer angemeldete Benutzer auch im Browser ermittelt werden, wobei dieser Benutzer dann auch für die Anmeldungen in der Web-Anwendung verwendet wird. Dieses Vorgehen hat jedoch zum Nachteil, dass für jeden Browser ein eigenes Plug-In entwickelt werden muss. Zudem werden Plug-Ins durch den Anwender oder durch neuere Systeme (neuere Versionen der Betriebssysteme) häufig aus Sicherheitsgründen per se abgeschaltet und stehen somit nicht zur Verfügung.

Für web-basierte Anwendungen sind Lösungen bekannt, die eine gemeinsame Benutzeranmeldung für mehrere Anwendungen innerhalb eines Browsers ermöglichen. Üblicherweise wird dies als Single-Sign-On (SSO) bezeichnet; die so registrierte einmalige Anwendung ist jedoch nur für die Anwendungen in dem gemeinsamen Browser (Browser-Instanz) gültig.

Den genannten Verfahren ist gemeinsam, dass eine jede Anmeldung in eine Sitzung mit eindeutiger Identifikation mündet, was in der Regel bedeutet, dass eine eindeutige Identifikationsnummer (Session-ID) erzeugt wird. Anwendungsseitig muss eine solche Identifikation (Session-ID) gespeichert und ggf. abgefragt werden. Ist dabei der Benutzer identifiziert, so handelt es sich um eine authentifizierte Sitzung; die Sitzung hat also einen dedizierten Nutzerbezug. Alle zugelassenen Anwendungen können dann an der Sitzung teilnehmen, indem sich die jeweilige Anwendung mittels der zugeteilten Session-ID bei einem zentralen Authentifizierungsdienst oder Autorisierungsdienst anmeldet. Hierzu ist es jedoch notwendig, dass alle Anwendungen auf die (gemeinsame) Session-ID zugreifen können, was bei heutigen Architekturen, in denen Browser-gestützte Anwendungen und nativ ablaufende Anwendungen parallel betrieben werden, schwierig ist. Der Zugriff auf eine gemeinsame Session-ID ist bereits über verschiedene Instanzen desselben Browsers hinweg schwierig, über verschiedene Browser (z. B. Microsoft Internet Explorer, Google Chrome, Firefox etc.) oder zwischen Browser und nativ ablaufenden Anwendungen oder Plug-Ins ist das meist überhaupt nicht möglich.

Es ist also eine Aufgabe der vorliegenden Erfindung, ein Verfahren für die gemeinsame Anmeldung bzw. Autorisierung / Authentifizierung für eine Vielzahl von Anwendungen oder Diensten anzugeben, wobei die oben beschriebenen Nachteile, insbesondere bei einer parallelen Verwendung von web-basierten Anwendungen und direkt auf einer Computer-Hardware ablaufenden Anwendungen bzw. von dort genutzten Diensten, vermieden werden sollen.

Es ist eine Kernidee der erfindungsgemäßen Lösung dieser Aufgabe, dass zur Nutzung einer Anwendung bzw. eines Dienstes ein aus individuellen Merkmalen einer benutzerseitigen Laufzeitumgebung gebildeter Identifikationsdatensatz, ein sogenannter Fingerabdruck oder Fingerprint, verwendet werden soll. Sofern zu dieser eindeutigen Identifizierung der Laufzeitumgebung (z. B. Computer) bereits bei einem zentralen Dienst (Authentifizierungsinstanz) gültige Anmeldeinformationen (z. B. Benutzername und Passwort) vorliegen, können weitere Anwendungen oder Dienste, die sich aus derselben Laufzeitumgebung heraus anmelden und somit denselben Identifikationsdatensatz (Fingerprint etc.) bereitstellen, ohne erneute Benutzereingabe (Benutzerkennung, Kennwort, Passwort etc.) automatisch anmelden. Ein solcher Identifikationsdatensatz oder "Fingerabdruck" identifiziert dabei möglichst eindeutig eine zusammengehörige Umgebung (Laufzeitumgebung), indem verschiedene Umgebungsparameter ausgewertet und für die Berechnung des Identifikationsdatensatzes (Fingerabdruck, Fingerprint) herangezogen werden.

Die Aufgabe wird insbesondere durch ein Verfahren gemäß dem Patentanspruch 1 und durch eine Anordnung gemäß Patentanspruch 10 gelöst.

Dabei wird ein Verfahren zur Authentifizierung eines Benutzers für die Nutzung einer Mehrzahl Anwendungen oder Dienste in einem Computernetzwerk, vorgeschlagen, wobei der Benutzer zur Nutzung einer Anwendung oder eines Dienstes Anmeldeinformationen bereitstellt, und wobei diese Anmeldeinformationen hinsichtlich einer Gültigkeit überprüft werden. Dabei wird in einem ersten Schritt aus individuellen Merkmalen einer benutzerseitigen Laufzeitumgebung ein Identifikationsdatensatz gebildet, wobei in einem zweiten Schritt dieser Identifikationsdatensatz zu einer Authentifizierungsinstanz übermittelt wird, wobei in einem dritten Schritt durch die Authentifizierungsinstanz der übermittelte Identifikationsdatensatz mit zumindest einem gespeicherten Identifikationsdatensatz verglichen wird, wobei bei hinreichender Übereinstimmung geprüft wird, ob zu dem Identifikationsdatensatz gültige Anmeldeinformationen gespeichert sind, und wobei bei Vorliegen solcher gültiger Anmeldeinformationen die Nutzung der Anwendung oder des Dienstes freigegeben wird, und wobei anderenfalls in einem vierten Schritt von dem Nutzer die Bereitstellung von Anmeldeinformationen angefordert, diese hinsichtlich Gültigkeit überprüft und im Falle einer Gültigkeit mit dem übermittelten Identifikationsdatensatz gespeichert und die Nutzung der Anwendung oder des Dienstes freigegeben und anderenfalls versagt wird. Dadurch ergibt sich für den Benutzer eine gemeinsame Anmeldung aller Anwendungen, Dienste oder Applikationen, die zu gemeinsamen durch den Identifikationsdatensatz identifizierbaren Umgebungen gehören. Unnötige Mehrfachanmeldungen eines Benutzers bei verschiedenen Anwendungen, Diensten oder Applikationen werden dadurch vermieden.

Die Aufgabe wird außerdem durch eine Anordnung aus einer Automatisierungskomponente und einer Authentifizierungsinstanz in einem Computernetzwerk gelöst, wobei die Automatisierungskomponente zur Nutzung einer Mehrzahl Anwendungen oder Dienste durch einen Benutzer eingerichtet ist, wobei zur Nutzung einer Anwendung oder eines Dienstes die Eingabe von Anmeldeinformationen durch den Benutzer vorgesehen ist, und wobei eine Überprüfung dieser Anmeldeinformationen hinsichtlich ihrer Gültigkeit vorgesehen ist. Dabei ist die Automatisierungskomponente zur Übermittlung eines aus individuellen Merkmalen einer benutzerseitigen Laufzeitumgebung gebildeten Identifikationsdatensatzes zu der Authentifizierungsinstanz eingerichtet, und die Authentifizierungsinstanz ist zur Ermittlung der Berechtigung des Benutzers zur Nutzung der Anwendung oder des Dienstes anhand des Identifikationsdatensatzes gemäß dem vorstehend beschriebenen Verfahren eingerichtet. Durch eine solche Anordnung werden die bereits anhand des Verfahrens erläuterten Vorteile realisiert.

Vorteilhafte Ausgestaltungen des erfindungsgemäßen Verfahrens sind in den abhängigen Patentansprüchen angegeben. Die dabei geschilderten Merkmale und deren Vorteile gelten sinngemäß auch für die erfindungsgemäße Anordnung. Die beschrieben Merkmale können sowohl einzeln, als auch in sinnvoller Kombination miteinander realisiert sein.

In einer vorteilhaften Ausgestaltung wird in dem vierten Schritt eine neue Sitzung erzeugt, wobei die neue Sitzung mit dem übermittelten Identifikationsdatensatz und mit den übermittelten gültigen Anmeldeinformationen verknüpft wird. Dadurch kann mit der erfindungsgemäßen Lösung ein Konzept realisiert werden, welches auf Sessions bzw. "Sitzungen" basiert. Ein solches Session-Konzept, welches die Verwaltung von sogenannten Session-IDs, also Sitzungs-Identifizierungsnummern, umfasst, ist dazu geeignet, mit bereits bestehenden Anwendungen und Diensten zusammenzuwirken, die auf die Nutzung eines solchen Session-Konzeptes ausgerichtet sind. Damit brauchen bereits bestehende Anwendungen oder Dienste nicht für die Verwendung mit dem erfindungsgemäßen Verfahren umprogrammiert werden.

Sofern zu dem übermittelten Identifikationsdatensatz bereits eine gültige Session (Sitzung) besteht, kann bei einem Zugriff bzw. einer Inbetriebnahme einer Anwendung oder bei dem Beginn der Nutzung eines Dienstes der bestehenden Session beigetreten werden, wodurch einerseits die unnötige Erzeugung mehrerer Sessions vermieden wird, andererseits es ermöglicht wird, dass alle Anwendungen und Dienste, die mit derselben Session-ID angemeldet sind, automatisch auch zum Austausch von Daten untereinander freigeschaltet sind. Damit ist es auch möglich, beim Beenden einer Sitzung, beispielsweise beim "Ausloggen" des zugeordneten Benutzers, alle damit angemeldeten Anwendungen und Dienste zu beenden bzw. zu sperren. Außerdem ist es damit möglich, bestimmte Grundeinstellungen für alle derselben Session-ID zugordneten Anwendungen bzw. Diensten einheitlich einzustellen, beispielsweise Benutzersprache, Bildschirm-Layouts etc. Vorteilhaft wird dazu jedem Benutzer ein Benutzerdaten-Profil zugeordnet, welches bei der erstmaligen Anmeldung bei einer Sitzung bzw. Erzeugung einer Sitzung dieser Sitzung (Session) zugeordnet wird. Die Übermittlung des Identifikationsdatensatzes und ggf. der Nutzerinformationen (soweit noch nicht zu diesem jeweiligen Identifikationsdatensatz gespeichert) erfolgt vorteilhaft mit der Anforderung der Nutzung einer der Anwendungen oder eines der Dienste bzw. mit der darauf zurückübermittelten Quittierungs-nachricht. Je nach Sicherheitsanforderungen können jedoch auch regelmäßig erneut Identifikationsdaten und/oder Nutzerdaten bzw. Kennwörter eingefordert werden.

Vorteilhaft weist eine oder jede Sitzung eine begrenzte zeitliche Gültigkeitsdauer und/oder eine begrenzte sachliche Gültigkeit auf. Mit der begrenzten zeitlichen Gültigkeitsdauer wird einem Sicherheitserfordernis Rechnung getragen, womit zeitlich unbegrenzte Sitzungen vermieden werden. Eine begrenzte sachliche Gültigkeit kann zum einen den Verwendungszweck einer einmal aufgebauten Sitzung bzw. Session-ID auf bestimmte Zwecke, bestimmte Anwendungen, bestimmte Dienste oder bestimmte Berechtigungsstufen (z. B. User-Berechtigung, Administrator-Berechtigung etc.) einschränken. Zudem ist es vorteilhaft möglich, räumliche Beschränkungen mit der Session zu verknüpfen, wobei dazu Ortsinformationen von dem Client-Computer zu der Authentifizierungsinstanz übermittelt werden sollten. Solche Ortsinformationen können auch Bestandteil des eindeutigen Identifikationsdatensatzes sein. Neben der Verknüpfung von Berechtigungen mit der geografischen Ortsinformation kann auch eine logische Ortsinformation (logischer Standort) berücksichtigt werden, beispielsweise die Zugehörigkeit des Computers bzw. der anfragenden Laufzeitumgebung zu einer bestimmten Domäne, zu einem bestimmten Netzwerk, oder auch sogenannte Nachbarschaftsinformationen, wobei festgestellt wird, ob die anfragende Laufzeitumgebung mit anderen, bekannten Laufzeitumgebungen direkt verknüpft oder vernetzt ist. Selbstverständlich können alle diese SicherheitsFeatures miteinander kombiniert werden.

Vorteilhaft erfolgt eine Registrierung des Identifikationsdatensatzes zusammen mit den Anmeldeinformationen und ggf. die Erzeugung einer "session" in einem separaten Schritt vor der Aufnahme der Nutzung einer Anwendung oder eines Dienstes, beispielsweise nach dem Booten eines Computers. Dadurch können Anwendungen dann jederzeit später ohne weitere Verzögerung gestartet werden. Alternativ kann aber auch die erstmalige Registrierung durch den Start einer ersten zu autorisierenden Anwendung bzw. der Anforderung der ersten Nutzung eines solchen Dienstes ausgelöst werden.

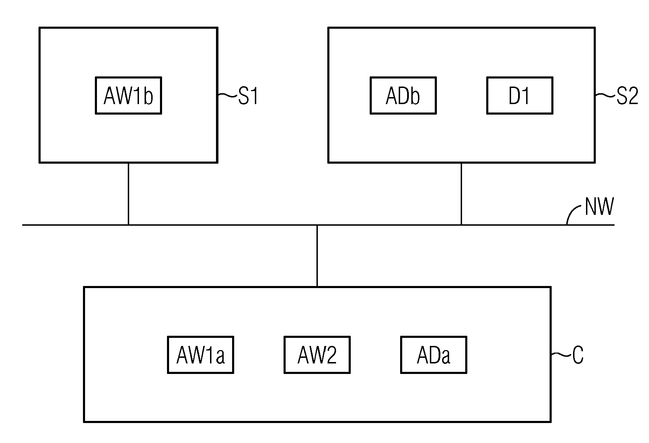

Ein Ausführungsbeispiel des erfindungsgemäßen Verfahrens wird nachfolgend anhand der Figur erläutert; das Ausführungsbeispiel dient gleichzeitig der Erläuterung einer erfindungsgemäßen Anordnung.

Dabei zeigt die einzige Figur in schematischer Darstellung einen Computer mit einer Laufzeitumgebung, der über ein Computernetzwerk mit zwei Servern vernetzt ist.

In der Figur ist ein Computer C schematisch dargestellt, der von einem (nicht dargestellten) Benutzer verwendet wird und der eine Laufzeitumgebung darstellt oder umfasst. Unter Laufzeitumgebung sollen dabei vorwiegend alle Hardware- und Software-Bestandteile, insbesondere auch das Betriebssystem, verstanden werden, deren Eigenschaften von einer lokal auf dem Computer C installierten Authentifizierungsinstanz ADa ausgelesen werden können. Der Computer C ist über ein Computernetzwerk NW (kurz: Netzwerk) mit den Servern S1, S2 verknüpft. Während auf dem Computer C die Anwendungen AW1a, AW2 installiert sind, ist auf dem Server S1 die Anwendung AW1b installiert, und auf dem Server S2 sind die Authentifizierungsinstanz ADb und der Dienst D1 verfügbar. Die Komponenten (Anwendungen) AW1a, AW1b sind die Client- bzw. Server-Komponente derselben Anwendung AW1. Die Anwendung AW2 und der Dienst D1 sind eigenständige Applikationen. Die Verteilung der Anwendungen AW1, AW2 und des Dienstes D1 auf den Computer C bzw. die Server S1, S2 ist hierbei nur exemplarisch; grundsätzlich können alle Komponenten, Anwendungen, Dienste etc. auch auf abweichenden Hardware-Plattformen oder auch einer gemeinsamen Hardware-Plattform installiert sein und ablaufen.

Die Authentifizierungsinstanz AD ist in diesem Ausführungsbeispiel ebenfalls zweigeteilt aufgebaut, wobei die Server-Komponente ADb die zentrale Komponente darstellt, in der wie nachfolgend beschrieben die Sitzungen (Sessions) verwaltet werden. Eine client-seitige, lokale Komponente der Authentifizierungsinstanz ADa dient dagegen vorwiegend der Ermittlung des Identifikationsdatensatzes und der Übertragung der für die Identifizierung notwendigen Informationen zu der Server-Komponente ADb. Bei der lokalen Komponente ADa können sich die Anwendungen AW1, AW2 sowie andere Instanzen, die beispielsweise den Dienst D1 nutzen möchten, anmelden. Die lokale Komponente der Authentifizierungsinstanz ADa führt dann den Dialog mit der zentralen Server-Komponente ADb durch.

Obwohl, wie vorgestehend beschrieben, der Computer C mindestens eine lokale Authentifizierungsinstanz ADa (lokale Komponente der Authentifizierungsinstanz) vorhält, die die Anwendung AW1a, AW2 bei der zentralen Komponente der Authentifizierungsinstanz ADb anmeldet, sind alternative Ausführungsformen möglich, bei denen sich die Anwendungen AW1a, AW2 selbst bei der zentralen Instanz anmelden, so dass dann die lokale Komponente der Authentifizierungsinstanz ADa entfallen kann.

Dies kann insbesondere bei Web-basierten Anwendungen der Fall sein, bei denen ein Datenaustausch mit anderen Programmen oder Anwendungen desselben Browsers und insbesondere desselben Computers C schwierig oder unmöglich sein kann. Dabei sollen also zumindest die zu startende Anwendung und eine lokale Authentifizierungsinstanz ADa in derselben Instanz eines Browsers ablaufen oder besser sogar je eine lokale Authentifizierungsinstanz ADa in jeder Web-Anwendung integriert sein.

Bei Architekturen, die keine homogene Laufzeitumgebung aufweisen, lässt sich wie bereits zuvor beschrieben oft nur für Teilbereiche ein jeweils eindeutiger Identifikationsdatensatz (Fingerprint) bilden. Auch in einem solchen Fall sind mehrere lokale Komponenten der Authentifizierungsinstanz ADa vorzusehen, die natürlich auch jeweils eigenständige Programme oder Bestandteile der jeweiligen Anwendungen sein können.

Zentraler Bestandteil des nachfolgend beschriebenen Verfahrens ist die Verwendung eines Identifikationsdatensatzes für die Laufzeitumgebung des Computers C; der Identifikationsdatensatz kann auch kurz als "Fingerabdruck" oder als "Fin-gerprint" bezeichnet werden. Ein solcher Fingerabdruck identifiziert dabei möglichst eindeutig eine zusammengehörende Umgebung, indem verschiedene Umgebungsparameter ausgewertet und für die Berechnung bzw. Erstellung des Fingerprints herangezogen werden. Insbesondere eignen sich Eigenschaften des verwendeten Betriebssystems des Computers C für die Erstellung bestimmter Bestandteile des Fingerabdrucks, beispielsweise eine Seriennummer des Betriebssystems, Art und Anzahl der installierten Laufzeitbibliotheken, installierte Zertifikate etc. Sofern sich eine Anwendung AW1a, AW2 aus einem Browser heraus authentifizieren bzw. autorisieren soll, können solche Betriebssystem-Eigenschaften möglicherweise nicht zugreifbar sein, in einem solchen Fall wird ein sogenanntes Browser-Fingerprinting vorgeschlagen, wobei beispielsweise anhand installierter Plug-Ins, Fonts und weiterer Systeminformationen eine genaue Identifikation der spezifischen Browser-Instanz ermöglicht werden kann. Browser-übergreifend ist hier beispielsweise auch das PET-Fingerprinting (http://fingerprint.pet-portal.eu/) nutzbar. Für den Fall, dass nicht für den kompletten Computer C bzw. die komplette Laufzeitumgebung ein einheitlicher Fingerprint erzeugt werden kann, wird nachfolgend auch die Möglichkeit beschrieben, unterschiedliche Fingerprints bzw. Identifikationsdatensätze, die jedoch mit demselben Benutzer assoziiert sind, zusammenzuführen. Erfindungsgemäß soll der eindeutige Fingerprint bzw. die zusammengeführten Fingerprints und die damit definierte gesamte Laufzeitumgebung den Geltungsbereich einer Single-Sign-On-Sitzung (nachfolgend als "Session") darstellen.

Zur Inbetriebnahme (Start) bzw. Nutzung einer Anwendung AW1a, AW2 oder eines Dienstes D1 wird lokal, also auf dem Computer C, der Identifikationsdatensatz erzeugt oder, sofern dieser schon vorliegt, ausgelesen. Das kann durch eine lokale Komponente ADa der Authentifizierungsinstanz erfolgen; eine entsprechende Funktionalität kann jedoch auch bei den Anwendungen AW1a, AW2 oder einem zugrundeliegenden Betriebssystem gegeben sein. Die dabei gewonnenen Informationen, insbesondere eine Kennung oder Identifizierung der in Betrieb zu nehmenden Anwendung AW1a, AW2, des Dienstes D1 oder der lokalen Authentifizierungsinstanz ADa wird zusammen mit dem Identifikationsdatensatz zu der zentralen Identifizierungsinstanz ADb übertragen. Die zentrale Authentifizierungsinstanz ADb prüft, ob bereits eine Sitzung (Session) existiert, die mit den übertragenen Fingerprints bzw. Identifikationsdatensatz verknüpft ist. Sofern bereits eine gültige Sitzung existiert, kann die anfragende Anwendung AW1a, AW2 bzw. der Dienst D1 an dieser Session teilnehmen und bekommt eine entsprechende Information übermittelt. Diese Information kann eine Session-ID umfassen, dies muss jedoch nicht so sein. Ggf. werden mit den Bestätigungsinformationen auch Informationen über eine maximale Gültigkeit der "Sitzung", weitere Restriktionen räumlicher oder sachlicher Art oder auch mit der Sitzung verknüpfte Benutzerinformationen (z.B. Profildatensatz) übermittelt.

Sofern bei dem Vergleich der übermittelten Identifikationsdaten mit den gespeicherten Identifikationsdatensätzen bestehender Sessions keine Übereinstimmung gefunden wird, also mit dem Identifikationsdatensatz keine aktuell gültige Sitzung verknüpft ist, so muss die Applikation (Anwendung AW1a, AW2 etc.) zuvor eine Authentifizierung durchführen, was beispielweise bedeutet, dass ein Benutzername und ein Passwort oder ähnliche "Credentials" zu dem zentralen Authentifizierungsdient (Authentifizierungsinstanz ADb) übermittelt werden. Bei einem erfolgreichen "Login" wird eine neue Sitzung erzeugt und mit dem Identifikationsdatensatz verknüpft; anderenfalls geschieht dies nicht und die Anwendung kann nicht starten bzw. der angefragte Dienst nicht genutzt werden.

Sollte es nicht möglich sein, einen eindeutigen, gemeinsamen "Fingerprint" für die gesamte Laufzeitumgebung zu bestimmen, sondern ggf. nur verschiedene Fingerprints für verschiedene Bereiche (Desktop-Applikationen, Browser eines ersten Herstellers, Browser eines zweiten Herstellers etc.), so wird der Identifikationsdatensatz nur in der jeweiligen Teilumgebung der zu startenden Anwendung erzeugt oder ausgelesen. Bei erstmaliger Übermittlung dieses Identifikationsdatensatzes zu der zentralen Authentifizierungsinstanz ADb wird ggf. eine Authentifizierung des Benutzers, wie vorstehend schon beschrieben, eingefordert und eine entsprechende Session erzeugt. Diese Session ist also mit einem Fingerprint verknüpft, der nicht für die gesamte Laufzeitumgebung des Computers C gültig ist. Sofern bei der Authentifizierung des Benutzers, also beispielsweise nach Übermittlung des Benutzernamens und des Kennwortes, seitens der zentralen Authentifizierungsinstanz ADb festgestellt wird, dass für denselben Nutzer bereits eine Session mit einem anderen Fingerprint besteht, nimmt die nunmehr anfragende Anwendung an dieser bestehenden Sitzung teil. Die Verknüpfung (Korrelation) der beiden Identifikationsdatensätze kann dabei "persistiert", also festgeschrieben werden, wodurch insbesondere auch nachfolgende Anmeldungen sogleich für die durch die verknüpften Fingerprints abgedeckte gesamte Laufzeitumgebung gelten. In einer alternativen Ausführungsform kann die zentrale Authentifizierungsinstanz ADb auch eine Nutzerdatenbank führen, bei der für jeden Benutzer ein Benutzerdatenprofil hinterlegt ist. Ein solches Benutzerdatenprofil kann jeder Anwendung, die sich für oder mit dem entsprechenden Benutzer registriert, übermittelt werden, so dass benutzerdefinierte Einstellungen (z. B. Spracheinstellung, Layout-Einstellungen etc.) automatisch angewendet werden können.

In vielen Fällen kann ein erzeugter bzw. ausgelesener Fingerprint statisch sein, das heißt, dass sich der Identifikationsdatensatz nicht zeit- oder ortsabhängig ändert. Damit ist es theoretisch möglich, dass ein Angreifer diesen ausliest, speichert und missbräuchlich verwendet. Falls das vorgeschlagene Verfahren also nicht in einer an sich gesicherten, vertrauenswürdigen Umgebung zum Einsatz kommt, empfiehlt sich eine Kombination mit einem weiteren Sicherheitsverfahren, etwa einer sicheren Client-Rechner-Authentifizierung. Weitere Sicherheitsfeatures können vorgesehen werden, indem beispielsweise die zeitliche oder örtliche oder logische Gültigkeit einer Session eingeschränkt wird.

Durch das vorstehend beschriebene Verfahren ergibt sich für einen Benutzer eine gemeinsame Anmeldung ("single-sign-on") aller Applikationen, Anwendungen oder Dienste, die zur gemeinsamen, durch den Identifikationsdatensatz (Fingerprint) oder eine Anzahl miteinander korrelierter Identifikationsdatensätze identifizierbaren Umgebung gehören. Gemeinsame Einstellungen, wie beispielsweise die Anzeigesprache, können über alle Anwendungen der Laufzeitumgebung hinweg synchron gehalten werden. Für den Benutzer ist eine Änderung in einer beliebigen Anwendung oder Applikation ausreichend, um die synchronisierte Änderung aller anderen Applikationen ebenfalls zu veranlassen. Darüber hinaus ergibt sich ein wesentlich weniger aufwändiges Session-Management. Eine globale Session-ID muss client-seitig nicht gespeichert werden und muss somit nicht für alle Applikationen der Umgebung direkt zugreifbar sein. Stattdessen kann jede Anwendung/Applikation den Fingerprint für die Umgebung jederzeit unabhängig voneinander erzeugen oder abrufen und zur Anmeldung bzw. Freischaltung verwenden. Alternativ kann eine Anwendung dazu auch eine lokale Authentifizierungsinstanz bemühen, die diese Aufgaben übernimmt.

## Patentansprüche

1. Verfahren zur Authentifizierung eines Benutzers für die Nutzung einer Mehrzahl Anwendungen (AW1a, AW1b, AW2) oder Dienste (D1)in einem Computernetzwerk (NW),
wobei der Benutzer zur Nutzung einer Anwendung (AW1a, AW1b, AW2) oder eines Dienstes (D1) Anmeldeinformationen bereitstellt, und
wobei diese Anmeldeinformationen hinsichtlich einer Gültigkeit überprüft werden,
**dadurch gekennzeichnet,**
**dass** in einem ersten Schritt aus individuellen Merkmalen einer benutzerseitigen Laufzeitumgebung zumindest ein Identifikationsdatensatz gebildet wird,
**dass** in einem zweiten Schritt dieser Identifikationsdatensatz zu einer Authentifizierungsinstanz (ADb) übermittelt wird,
**dass** in einem dritten Schritt durch die Authentifizierungsinstanz (ADb) der übermittelte Identifikationsdatensatz mit zumindest einem gespeicherten Identifikationsdatensatz verglichen wird, wobei bei hinreichender Übereinstimmung geprüft wird, ob zu dem Identifikationsdatensatz gültige Anmeldeinformationen gespeichert sind, und wobei bei Vorliegen solcher gültiger Anmeldeinformationen die Nutzung der Anwendung (AW1a, AW1b, AW2) oder des Dienstes (D1) freigegeben wird, und
**dass** anderenfalls in einem vierten Schritt von dem Nutzer die Bereitstellung von Anmeldeinformationen angefordert, diese hinsichtlich Gültigkeit überprüft und im Falle einer Gültigkeit mit dem übermittelten Identifikationsdatensatz gespeichert und die Nutzung der Anwendung (AW1a, AW1b, AW2) oder des Dienstes (D1) freigegeben und anderenfalls versagt wird.

2. Verfahren nach Patentanspruch 1,
**dadurch gekennzeichnet,**
**dass** in dem vierten Schritt eine neue Sitzung erzeugt wird, wobei die neue Sitzung mit dem übermittelten Identifikationsdatensatz mit den übermittelten gültigen Anmeldeinformationen verknüpft wird.

3. Verfahren nach Patentanspruch 2,
**dadurch gekennzeichnet,**
**dass** in dem dritten Schritt bei dem Vergleich des übermittelten Identifikationsdatensatzes mit zumindest einem gespeicherten Identifikationsdatensatz eine dem gespeicherten Identifikationsdatensatz zugeordnete bestehende Sitzung aufgefunden wird.

4. Verfahren nach einem der Patentansprüche 2 oder 3,
**dadurch gekennzeichnet,**
**dass** eine oder jede Sitzung eine begrenzte zeitliche Gültigkeitsdauer und/oder eine begrenzte sachliche Gültigkeit aufweist.

5. Verfahren nach Patentanspruch 4,
**dadurch gekennzeichnet,**
**dass** die zeitliche Gültigkeitsdauer und/oder die sachliche Gültigkeit durch die Authentifizierungsinstanz (ADb) anhand einer mit den Anmeldeinformationen verknüpften Identität eines Benutzers und/oder anhand von mit dem Identifikationsdatensatz verknüpften Berechtigungen festgelegt werden.

6. Verfahren nach Patentanspruch 5,
**dadurch gekennzeichnet,**
**dass** mit dem Identifikationsdatensatz Ortsinformationen über einen derzeitigen geographischen oder logischen Standort eines Computers mit der Laufzeitumgebung übermittelt werden, wobei die sachliche Gültigkeit anhand dieser Ortsinformationen festgelegt wird.

7. Verfahren nach einem der Patentansprüche 2 bis 6,
**dadurch gekennzeichnet,**
**dass** in einer Laufzeitumgebung eine Mehrzahl unterschiedlicher Identifikationsdatensätze erzeugt werden, wobei in dem Fall, in dem ein erster Identifikationsdatensatz mit gültigen Anmeldeinformationen mit einer bestehenden Sitzung verknüpft ist und ein zweiter Identifikationsdatensatz mit denselben gültigen Anmeldeinformationen zu der Authentifizierungsinstanz (ADb) übermittelt werden, dieser zweite Identifikationsdatensatz derselben bestehenden Sitzung zugeordnet wird.

8. Verfahren nach einem der vorhergehenden Patentansprüche,
**dadurch gekennzeichnet,**
**dass** in dem dritten oder dem vierten Schritt eine Authentifizierung des Computers mit der Laufzeitumgebung durchgeführt wird.

9. Verfahren nach einem der vorhergehenden Patentansprüche,
**dadurch gekennzeichnet,**
**dass** das Versenden des Identifikationsdatensatzes und der Anmeldeinformationen, die Prüfung der Anmeldeinformationen hinsichtlich Gültigkeit und im Falle einer Gültigkeit die Speicherung der Anmeldeinformationen mit dem übermittelten Identifikationsdatensatz vor einer erstmaligen Nutzung einer Anwendung oder eines Dienstes als ein separater Registrierungsschritt erfolgt.

10. Anordnung aus einer Automatisierungskomponente und einer Authentifizierungsinstanz (ADb) in einem Computernetzwerk (NW),
wobei die Automatisierungskomponente zur Nutzung einer Mehrzahl Anwendungen (AW1a, AW1b, AW2) oder Dienste (D1) durch einen Benutzer eingerichtet ist,
wobei zur Nutzung einer Anwendung (AW1a, AW1b, AW2) oder eines Dienstes (D1) die Eingabe von Anmeldeinformationen durch den Benutzer vorgesehen ist, und wobei eine Überprüfung dieser Anmeldeinformationen hinsichtlich ihrer Gültigkeit vorgesehen ist,
**dadurch gekennzeichnet,**
**dass** die Automatisierungskomponente zur Übermittlung eines aus individuellen Merkmalen einer benutzerseitigen Laufzeitumgebung gebildeten Identifikationsdatensatzes zu der Authentifizierungsinstanz (ADb) eingerichtet ist, und die Authentifizierungsinstanz (ADb) zur Ermittlung der Berechtigung des Benutzers zur Nutzung der Anwendung (AW1a, AW1b, AW2) oder des Dienstes (D1) anhand des Identifikationsdatensatzes gemäß dem Verfahren nach Patentanspruch 1 eingerichtet ist.
